# EUROPÄISCHE PATENTSCHRIFT

(11) **EP 1 456 506 B1**
(45) Veröffentlichungstag und Bekanntmachung des Hinweises auf die Patenterteilung: **04.07.2007**
(21) Anmeldenummer: 02779099.7
(22) Anmeldetag: 04.12.2002
(51) Int. Cl.: F01D 11/00, F16J 15/08

(54) **GASTURBINENANORDNUNG**
GAS TURBINE ASSEMBLY
ENSEMBLE DE TURBINE A GAZ

(30) Priorität: 11.12.2001 RU 2001133771
(43) Veröffentlichungstag der Anmeldung: 15.09.2004
(73) Patentinhaber: Alstom Technology Ltd, 5400 Baden (CH); Fokine, Arkadi, 109444 Moskau (RU); Kwasnikov, Anatoli, 111672 Moskau (RU); Ossipov, Igor, 129347 Moskau (RU); Pfeiffer, Christoph, 79761 Waldshut-Tiengen (DE); Stengele, Jorg, 5406 Ratihof (CH); Trifonof, Sergey, Moskau 109378 (RU)
(72) Erfinder: FOKINE, Arkadi, 109444 Moskau (RU); KWASNIKOV, Anatoli, 111672 Moskau (RU); OSSIPOV, Igor, 129347 Moskau (RU); PFEIFFER, Christoph, 79761 Waldshut-Tiengen (DE); STENGELE, Jörg, CH-5406 Rütihof (CH); TRIFONOF, Sergey, 109378 Moskau (RU)
(86) Internationale Anmeldenummer: PCT/CH2002/000662
(87) Internationale Veröffentlichungsnummer: WO 2003/054358

(56) Entgegenhaltungen:
- WO-A-00/70192
- WO-A-95/12004
- DE-A- 19 609 690
- FR-A- 2 646 221
- US-A- 4 199 151
- US-A- 4 752 184
- US-A- 5 145 316
- US-A- 5 333 995

## Beschreibung

### TECHNISCHES GEBIET

Die Erfindung bezieht sich auf eine Gasturbinenanordnung mit einem Wärmeschutzschild und einer benachbarten Leitschaufel gemäss dem Anspruch 1.

### STAND DER TECHNIK

Gasturbinenanordnungen sind zahlreich aus dem Stand der Technik bekannt. US-A-3,807,891, US-A-3,995,971, US-A-4,384,822, US-A-4,512,712, US-A-4,792,277, US-A-4,863,343, US-A-4,869,640, US-A-4,902,198, US-A-4,930,980, US-A-5,158,430, US-A-5,238,364, US-A-5,380,155, US-A-5,429,478 offenbaren derartige Anordnungen.

Bei verschiedenen Anordnungen sind die Leitschaufeln direkt mit den benachbarten Wärmestausegmenten verbunden, so zum Beispiel offenbart in der Figur 1 der US-A-4,384,822, der US-A-4,863,343, der US-A-4,930,980 oder der Figur 2 der US-A-5,429,478.

Problematisch sind generell Anordnungen, bei denen zwischen den Leitschaufeln und den benachbarten Wärmestausegmenten eine Lücke entsteht, die ein Eindringen der Heissgase und damit eine Schädigung der beteiligten Teile zulässt. Dies ist zum Beispiel aus der Figur 1 der US-A-4,902,198 bekannt. US-A-5.333.995 offenbart eine ähnliche Anordnung.

### DARSTELLUNG DER ERFINDUNG

Ziel der Erfindung ist es, die genannten Nachteile zu vermeiden. Der Erfindung liegt die Aufgabe zu Grunde, eine Gasturbinenanordnung zu schaffen, mit der ein verbesserter Schutz des Gehäuses der Gasturbine zwischen einer Leitschaufel und einem Wärmestausegment vor eindringenden Heissgasen möglich ist.

Erfindungsgemäss wird die Aufgabe durch eine Gasturbinenanordnung gemäss dem Anspruch 1 gelöst.

Da das Dichtungselement zum Heissgaskanal hin durch ein Schutzschild getrennt ist ermöglicht dies einen verbesserten Schutz und somit eine verlängerte Lebensdauer des Dichtungselements vor den thermischen Einwirkungen des Heissgases während des Betriebes der Gasturbine. Reduzierte Temperaturgradienten in dem Dichtungselement vermeiden zusätzlich ein Verspannen der Dichtung und einen möglichen Verlust der Federwirkung. Ebenso wird durch das Schutzschild eine Verschmutzung des Dichtungselements durch die Heissgase vermieden.

Das Dichtungselement kann vorteilhaft eine W-Form aufweisen, welches in axialer Richtung in bezug auf den Rotor der Gasturbine zwischen den Leitschaufeln und den Wärmestausegmenten angeordnet ist, so dass es eine ausreichende Federwirkung auf die beiden Elemente auswirkt.

Vorteilhaft können das Dichtungselement und das Schutzschild über den Umfang segmentiert sein, so dass deren Einbau erleichtert wird. Sie können beispielsweise aus vier bis acht Segmenten bestehen.

Zur sicheren Lagerung befinden sich das Dichtungselement und das Schutzschild in bzw. auf einem Absatz des Wärmestausegments wobei das Schutzschild eine L-Form aufweist und liegend auf den Absatz angeordnet ist.

Das Dichtungselement und das Schutzschild können aus einer Nickel- oder Cobald-Basis-Superlegierung bestehen und mit einer metallischen Beschichtung wie beispielsweise MCrAIY beschichtet sein.

### KURZE BESCHREIBUNG DER ZEICHNUNGEN

Die Erfindung wird anhand der beigefügten Zeichnungen illustriert, wobei
- **Fig.1**: eine Gasturbinenanordnung mit einem Wärmestausegment und einer benachbarten Leitschaufel und einem Dichtungselement zwischen den beiden Elementen zeigt,
- **Fig. 2**: eine Gasturbinenanordnung mit einem Wärmestausegment und einer benachbarten Leitschaufel, einem Dichtungelement zwischen den beiden Elementen und mit einem Schutzschild für das Dichtungselement darstellt und
- **Fig. 3**: eine Ansicht gemäss dem Schnitt III-III der Figur 2 zeigt.

Es werden nur die für die Erfindung wesentlichen Elemente dargestellt. Gleiche Elemente werden in unterschiedlichen Figuren mit gleichen Bezugszeichen versehen.

### WEG ZUR AUSFÜHRUNG DER ERFINDUNG

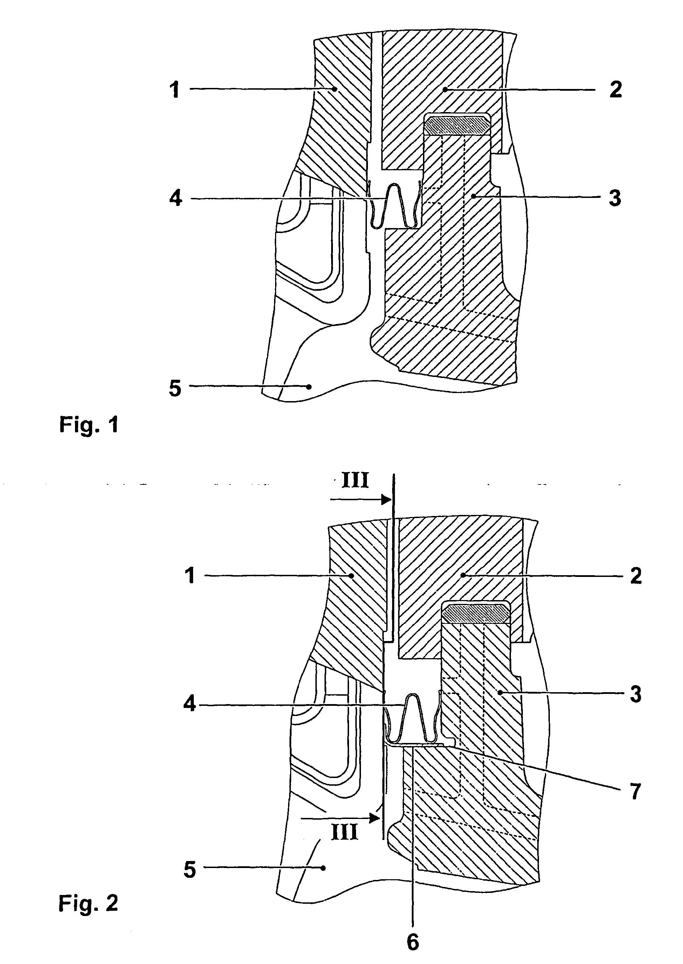

Figur 1 zeigt eine Ausschnitt einer Gasturbine. An einem nicht dargestellten Gehäuse ist auf einem Träger 2 ein Wärmestausegment 3 angeordnet. Wie allgemein aus dem Stand der Technik bekannt, befinden sich unterhalb des Wärmestausegments 3 Laufschaufeln, welche über den Umfang an einem nicht darstellten Rotor angeordnet sind. Dem Wärmestausegment 3 benachbart befinden sich Leitschaufeln 1. Üblicherweise sind die Leitschaufeln 1 und die Wärmestausegmente 3 ebenfalls über dem Umfang des Gehäuses angeordnet. Die Lauf- und die Leitschaufeln 1 befinden sich in einem Heissgaskanal 5 der Gasturbine.

Wie aus dem Figur 1 ersichtlich, ist erfindungsgemäss zwischen den Leitschaufeln 1 und den Wärmestausegmenten 3 mindestens ein Dichtungselement 4 vorhanden. Dieses ist ebenfalls über den Umfang angeordnet. Das Dichtungselement 4 weist eine W-Form auf. Um eine richtige Federwirkung auf die Leitschaufel 1 und das Wärmestausegment 3 zu erhalten, ist das "W" in axialer Richtung in bezug auf den Rotor der Gasturbine zwischen den Leitschaufeln 1 und den Wärmestausegmenten 3 angeordnet.

Wie weiter aus der Figur 2 ersichtlich, ist das Dichtungselement 4 zum Heissgaskanal 5 hin durch ein Schutzschild 6 getrennt. Dies ermöglicht einen verbesserten Schutz und somit eine verlängerte Lebensdauer des Dichtungselements 4 vor den thermischen Einwirkungen des Heissgases während des Betriebes der Gasturbine. Reduzierte Temperaturen bzw. Temperaturgradienten in dem Dichtungselement 4 vermeiden zusätzlich ein Verspannen der Dichtung und einen möglichen Verlust der Federwirkung. Ebenso wird eine Verschmutzung des Dichtungselements 4 durch die Heissgase vermieden.

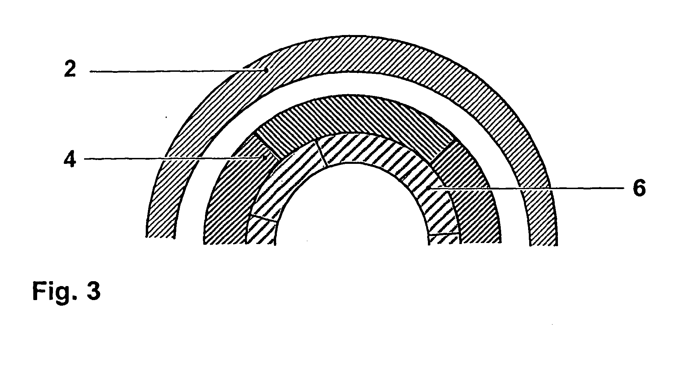

Wie aus beiden Figuren 2 und 3 ersichtlich, sind das Dichtungselement 4 und das Schutzschild 6 in bzw. auf einem Absatz 7, welcher sich im Wärmestausegment 3 befindet, angeordnet. Dies ermöglicht ein gute Dichtwirkung und eine sichere Anordnung beider Elemente. Das Schutzschild 6 weist eine L-Form auf und ist liegend auf dem Absatz 7 angeordnet.

Aus der Figur 3, welche einen Schnitt gemäss der Linie III-III der Figur 2 zeigt, ist ersichtlich, dass sowohl das Dichtungselement 4 als auch das Schutzschild 6 über den Umfang segmentiert sein können, so dass deren Einbau erleichtert wird. In einer vorteilhaften Ausführungsform besteht das Dichtungselement 4 und das Schutzschild 6 aus vier bis acht Segmenten.

Das Dichtungselement 4 und das Schutzschild 6 können aus einer Nickel- oder Cobald-Basis-Superlegierung bestehen und mit einer metallischen Beschichtung wie beispielsweise MCrAlY beschichtet sein.

### BEZUGSZEICHENLISTE

- 1: Leitschaufel
- 2: Träger
- 3: Wärmestausegment
- 4: Dichtungselement
- 5: Heissgaskanal
- 6: Schutzschild für Dichtungselement 4
- 7: Absatz

## Patentansprüche

1. Gasturbinenanordnung, umfassend
- Wärmestausegmente (3), welche Laufschaufeln gegenüber an einem Träger (2) über den Umfang an einem Gehäuse der Gasturbine angeordnet sind, wobei die Laufschaufeln über den Umfang an einem Rotor der Gasturbine angeordnet sind,
- Leitschaufeln (1), welche den Wärmestausegmenten (3) benachbart über den Umfang zwischen dem Gehäuse der Gasturbine und dem Rotor angeordnet sind,
- wobei die Lauf- und die Leitschaufeln (1) in einem Heissgaskanal (5) der Gasturbine angeordnet sind,
**dadurch gekennzeichnet, dass**
- zwischen den Leitschaufeln (1) und den Wärmestausegmenten (3) mindestens ein über den Umfang angeordnetes Dichtungselement (4) vorhanden ist, welches Dichtungselement (4) zum Heissgaskanal (5) hin durch ein Schutzschild (6) getrennt ist,
- wobei das Schutzschild (6) eine L-Form aufweist und liegend auf einem Absatz (7) des Wärmestausegments (3) und das Dichtungselement (4) in dem Absatz (7) des Wärmestausegments (3) und auf dem Schutzschild (6) angeordnet sind.

2. Gasturbinenanordnung nach Anspruch 1,
**dadurch gekennzeichnet, dass**
das Dichtungselement (4) eine W-Form aufweist, weiches in axialer Richtung in bezug auf den Rotor der Gasturbine zwischen den Leitschaufeln (1) und den Wärmestausegmenten (3) angeordnet ist.

3. Gasturbinenanordnung nach Anspruch 1 oder 2,
**dadurch gekennzeichnet, dass**
das Dichtungselement (4) und/oder das Schutzschild (6) über den Umfang segmentiert sind.

4. Gasturbinenanordnung nach Anspruch 3,
**dadurch gekennzeichnet, dass**
das Dichtungselement (4) und/oder das Schutzschild (6) aus vier bis acht Segmenten bestehen.

5. Gasturbinenanordnung nach einem der Ansprüche 1 bis 4,
**dadurch gekennzeichnet, dass**
das Dichtungselement (4) und/oder das Schutzschild (6) aus einer Nickel- oder Cobald-Basis-Superlegierung bestehen.

6. Gasturbinenanordnung nach einem der Ansprüche 1 bis 4,
**dadurch gekennzeichnet, dass**
das Dichtungselement (4) und/oder das Schutzschild (6) mit einer metallischen Beschichtung beschichtet sind.

## Claims

1. Gas turbine arrangement, comprising
- heat accumulation segments (3) which are arranged, opposite moving blades, on a carrier (2) over the circumference on a casing of the gas turbine, the moving blades being arranged over the circumference on a rotor of the gas turbine,
- guide vanes (1) which are arranged adjacently to the heat accumulation segments (3) over the circumference between the casing of the gas turbine and the rotor,
- the moving blades and the guide vanes (1) being arranged in a hot-gas duct (5) of the gas turbine,
**characterized in that**
- at least one sealing element (4) arranged over the circumference is present between the guide vanes (1) and the heat accumulation segments (3), which sealing element (4) is separated in relation to the hot-gas duct (5) by means of a protective shield (6),
- the protective shield (6) having an L-shape and being arranged horizontally on a step (7) of the heat accumulation segment (3) and the sealing element (4) being arranged in a step (7) of the heat accumulation segment (3) and on the protective shield (6).

2. Gas turbine arrangement as claimed in claim 1, **characterized in that** the sealing element (4) has a w-shape and is arranged in the axial direction with respect to the rotor of the gas turbine between the guide vanes (1) and the heat accumulation segments (3).

3. Gas turbine arrangement as claimed in claim 1 or 2, **characterized in that** the sealing element (4) and/or the protective shield (6) are segmented over the circumference.

4. Gas turbine arrangement as claimed in claim 3, **characterized in that** the sealing element (4) and/or the protective shield (6) consist of four to eight segments.

5. Gas turbine arrangement as claimed in one of claims 1 to 4, **characterized in that** the sealing element (4) and/or the protective shield (6) consist of a nickel- or cobalt-based superalloy.

6. Gas turbine arrangement as claimed in one of claims 1 to 4, **characterized in that** the sealing element (4) and/or the protective shield (6) are coated with a metallic coating.

## Revendications

1. Ensemble de turbine à gaz, comprenant :
- des éléments accumulateurs de chaleur (3) qui sont disposés en regard d'aubes mobiles sur un support (2) circonférentiellement sur un carter de la turbine à gaz, les aubes mobiles étant disposées circonférentiellement sur un rotor de la turbine à gaz,
- des aubes directrices (1) qui sont disposées à proximité des segments accumulateurs de chaleur (3) circonférentiellement entre le carter de la turbine à gaz et le rotor,
- les aubes mobiles et les aubes directrices (1) étant disposées dans un canal de gaz chaud (4) de la turbine à gaz,
**caractérisé en ce que**
- l'on prévoit entre les aubes directrices (1) et les segments accumulateurs de chaleur (3) au moins un élément d'étanchéité (4) disposé circonférentiellement, lequel élément d'étanchéité (4) est divisé vers le canal de gaz chaud (5) par un bouclier thermique (6),
- le bouclier thermique (6) présentant une forme en L et étant disposé à plat sur un épaulement (7) du segment accumulateur de chaleur (3), et l'élément d'étanchéité (4) étant disposé dans l'épaulement (7) du segment accumulateur de chaleur (3) et sur le bouclier thermique (6).

2. Ensemble de turbine à gaz selon la revendication 1,
**caractérisé en ce que**
l'élément d'étanchéité (4) présente une forme en W, et est disposé dans la direction axiale par rapport au rotor de la turbine à gaz entre les aubes directrices (1) et les segments accumulateurs de chaleur (3).

3. Ensemble de turbine à gaz selon la revendication 1 ou 2,
**caractérisé en ce que**
l'élément d'étanchéité (4) et/ou le bouclier thermique (6) sont segmentés circonférentiellement.

4. Ensemble de turbine à gaz selon la revendication 3,
**caractérisé en ce que**
l'élément d'étanchéité (4) et/ou le bouclier thermique (6) se composent de quatre à huit segments.

5. Ensemble de turbine à gaz selon l'une quelconque des revendications 1 à 4,
**caractérisé en ce que**
l'élément d'étanchéité (4) et/ou le bouclier thermique (6) se composent d'un superalliage à base de nickel ou de cobalt.

6. Ensemble de turbine à gaz selon l'une quelconque des revendications 1 à 4,
**caractérisé en ce que**
l'élément d'étanchéité (4) et/ou le bouclier thermique (6) sont revêtus d'un revêtement métallique.
